(19) Europäisches Patentamt
European Patent Office
Office européen des brevets

(11) **EP 4 145 907 A1**

(12) **EUROPEAN PATENT APPLICATION**
published in accordance with Art. 153(4) EPC

(43) Date of publication:
**08.03.2023  Bulletin 2023/10**

(21) Application number: **21796143.2**

(22) Date of filing: **26.04.2021**

(51) International Patent Classification (IPC):
**H04W 40/22** (2009.01)   **H04B 7/155** (2006.01)

(52) Cooperative Patent Classification (CPC):
**H04B 7/155; H04W 40/22; H04W 76/20;
H04W 76/27**

(86) International application number:
**PCT/CN2021/089885**

(87) International publication number:
**WO 2021/218910 (04.11.2021 Gazette 2021/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **30.04.2020   CN 202010367097**

(71) Applicant: **Vivo Mobile Communication Co., Ltd.
Dongguan, Guangdong 523863 (CN)**

(72) Inventor: **PENG, Shuyan
Dongguan, Guangdong 523863 (CN)**

(74) Representative: **Lavoix
Bayerstraße 83
80335 München (DE)**

(54) **LINK STATE SWITCHING METHOD AND COMMUNICATION DEVICE**

(57)    The present invention provides a link state switching method and a communications device. The method includes: switching between a first link state and a second link state based on a first guard period, where the first link state and the second link state are link states of an integrated access backhaul IAB node in different transmission modes.

FIG. 3

**Description**

**CROSS-REFERENCE TO RELATED APPLICATIONS**

This application claims priority to Chinese Patent Application No. 202010367097.5, filed in China on April 30, 2020, which is incorporated herein by reference in its entirety.

**TECHNICAL FIELD**

The present invention relates to the field of wireless communications technologies, and in particular, to a link state switching method and a communications device.

**BACKGROUND**

In a wireless communications system, to increase network capacity and coverage and satisfy the need for cell deployment flexibility, an integrated access backhaul (Integrated Access Backhaul, IAB) technology is proposed. An IAB node includes a distributed unit (Distributed Unit, DU) and a mobile termination (Mobile Termination, MT), where the DU of the IAB node provides service for terminals (User Equipment, UE) accessing the IAB node, and the MT is able to establish a wireless backhaul link (Backhaul Link) with a DU of a previous-hop IAB node (for example, an IAB parent node or a donor IAB node, that is, donor IAB). In addition, the IAB node may have the following four link states: DU transmission (Transmission, TX), MT transmission, DU reception (Reception, RX), and MT reception. Switching between link states is supported. However, inter-symbol overlap is likely to occur on the IAB node during a switching between link states, causing interference to data transmission, which degrades reliability of data transmission.

**SUMMARY**

Embodiments of the present invention provide a link state switching method and a communications device, so as to resolve a problem of low reliability of data transmission of an IAB system during link switching.
To resolve the foregoing technical problem, the present invention is implemented as follows.
According to a first aspect, an embodiment of the present invention provides a link state switching method, applied to a first relay device. The method includes:

switching between a first link state and a second link state based on a first guard period, where
the first link state and the second link state are link states of an IAB node in different transmission modes.

According to a second aspect, an embodiment of the present invention further provides a link state switching apparatus, applied to a first relay device. The apparatus includes:

a switching module, configured to switch between a first link state and a second link state based on a first guard period, where
the first link state and the second link state are link states of an IAB node in different transmission modes.

According to a third aspect, an embodiment of the present invention further provides a relay device, where the relay device includes a memory, a processor, and a computer program stored in the memory and capable of running on the processor, where when the computer program is executed by the processor, the steps of the link state switching method according to the first aspect are implemented.
According to a fourth aspect, an embodiment of the present invention further provides a computer-readable storage medium, where the computer-readable storage medium stores a computer program, and when the computer program is executed by a processor, the steps of the link state switching method according to the first aspect are implemented.
According to a fifth aspect, an embodiment of this application provides a chip. The chip includes a processor and a communications interface, where the communications interface is coupled to the processor, and the processor is configured to run programs or instructions to implement the steps of the link state switching method according to the first aspect.
In the embodiments of the present invention, switching is performed between the first link state and the second link state based on the first guard period, where the first link state and the second link state are link states of the IAB node in different transmission modes. This can avoid interference caused by inter-symbol overlap occurring on the IAB node during a switching between link states in different transmission modes, thereby improving reliability of data transmission of the IAB system.

## BRIEF DESCRIPTION OF DRAWINGS

FIG. 1 is a schematic structural diagram of an IAB system according to an embodiment of the present invention;
FIG. 2 is a schematic structural diagram of CU-DU of the IAB system according to an embodiment of the present invention;
FIG. 3 is a schematic flowchart of a link state switching method according to an embodiment of the present invention;
FIG. 4 is a first schematic diagram of a principle of link state switching of an IAB node according to an embodiment of the present invention;
FIG. 5 is a second schematic diagram of the principle of link state switching of the IAB node according to the embodiment of the present invention;
FIG. 6 is a first schematic structural diagram of a link state switching apparatus according to an embodiment of the present invention;
FIG. 7 is a second schematic structural diagram of the link state switching apparatus according to the embodiment of the present invention;
FIG. 8 is a third schematic structural diagram of the link state switching apparatus according to the embodiment of the present invention; and
FIG. 9 is a schematic structural diagram of hardware of a relay device according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

In the specification and claims of this application, the term "include" and any other variants thereof are intended to cover a non-exclusive inclusion. For example, a process, method, system, product, or device that includes a list of steps or units is not necessarily limited to those steps or units, but may include other steps or units not expressly listed or inherent to such a process, method, product, or device. In addition, in the specification and claims, the use of "and/or" represents presence of at least one of the connected objects, for example, "A and/or B" indicates the following three cases: only A presents, only B presents, or both A and B present.

In the embodiments of the present invention, the word such as "an example" or "for example" is used to represent giving an example, an instance, or an illustration. Any embodiment or design solution described as "an example" or "for example" in the embodiments of the present invention shall not be interpreted to be more preferential or advantageous than other embodiments or design solutions. Specifically, the word such as "an example" or "for example" is intended to present a related concept in a specific manner.

The following specifically describes the link state switching method provided in the embodiments of this application through specific embodiments and application scenarios thereof with reference to the accompanying drawings.

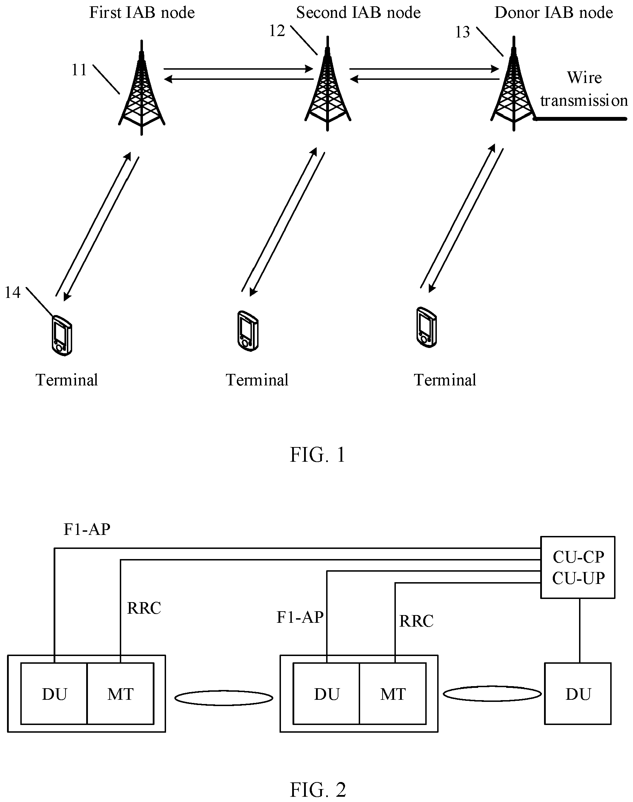

FIG. 1 is a schematic structural diagram of an integrated access backhaul (Integrated Access Backhaul, IAB) system according to an embodiment of the present invention. As shown in FIG. 1, the IAB system includes at least two IAB nodes (such as a first IAB node 11 and a second IAB node 12), a donor (donor) IAB node 13, and terminals (User Equipment, UE) 14, where each IAB node includes a distributed unit (Distributed Unit, DU) and a mobile termination (Mobile Termination, MT), the DU of the IAB node provides access service for the terminals 14 accessing the IAB node, the MT is able to establish a wireless backhaul link (Backhaul Link) with a DU of a previous-hop IAB node, that is, an IAB parent node (for example, the second IAB node 12 is an IAB parent node of the first IAB node 11, the donor IAB node 13 is an IAB parent node of the second IAB node 12, and the donor IAB node 13 is a network-side device including a CU and the like), so as to perform data transmission; and the donor IAB node 13 is provided with a DU, with a backhaul link being wire transmission. Certainly, FIG. 1 shows only a case in which the IAB node includes the first IAB node 11 and the second IAB node 12. An actual IAB system may include more IAB nodes or only one IAB node (that is, there is only one IAB node, and one network device corresponding to the IAB node is a parent node of the IAB node). This is not limited herein.

In addition, FIG. 2 is a schematic structural diagram of centralized unit-DU (Centralized Unit-Distributed Unit, CU-DU) according to an embodiment of the present invention. As shown in FIG. 2, in an IAB system, DUs of all IAB nodes are connected to a CU node, and the CU node is able to configure the DUs through an F1 application (F1-AP) protocol, and the CU is able to configure an MT through a radio resource control (Radio Resource Control, RRC) protocol. Alternatively, a DU of a parent node of an IAB node is able to configure an MT of the IAB node through RRC. Introduction of an IAB system into wireless communication (for example, 5G NR) can resolve a problem that a wire transmission network is not deployed in place when access points are intensively deployed. To be specific, in the absence of the wire transmission network, the access points can implement data transmission through wireless backhaul to transmit backhaul information of the IAB node.

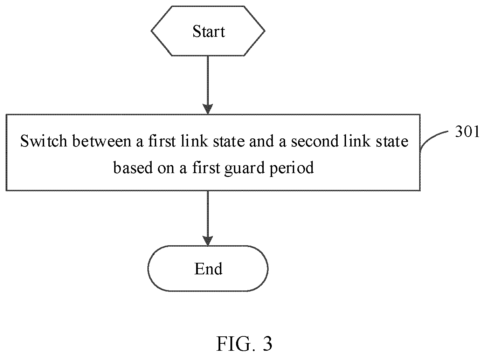

Referring to FIG. 3, FIG. 3 is a schematic flowchart of a link state switching method according to an embodiment of the present invention. The link state switching method is applied to a first relay device. As shown in FIG. 3, the link state switching method includes the following step.

Step 301: Switch between a first link state and a second link state based on a first guard period, where the first link state and the second link state are link states of an IAB node in different transmission modes.

Herein, the first guard period is defined by a protocol or configured by first signaling, so that based on the first guard period, the IAB node is able to switch between the first link state and the second link state corresponding to the IAB node in different transmission modes, which can avoid interference caused by inter-symbol overlap occurring on the IAB node during a switching between link states in different transmission modes, thereby improving reliability of data transmission.

In this application, the IAB node includes an MT and a DU, and both the MT and the DU can perform TX or reception RX of data. In a case that half duplex (Half duplex) is supported between the MT and the DU of the IAB node, link states of the IAB node for performing data transmission may include MT TX, MT RX, DU TX, and DU RX. In a case that full duplex (Full duplex) is supported between the MT and the DU of the IAB node or a case that only reception is supported between the MT and the DU of the IAB node, data reception or transmission of the MT and data reception of the DU can be performed synchronously. In a case that full duplex is supported between the MT and the DU of the IAB node or a case that only transmission is supported between the MT and the DU of the IAB node, data reception or transmission of the MT and data transmission of the DU can be performed synchronously; or in a case that full duplex is supported between the MT and the DU of the IAB node, transmission and reception can be performed synchronously. Therefore, the link states of the IAB node for performing data transmission may further include the following manners:

DU TX and MT TX work synchronously (DU TX and MT TX for short), that is, DU and MT transmit data synchronously;
DU RX and MT RX work synchronously (DU RX and MT RX for short), that is, DU and MT receive data synchronously;
DU RX and MT TX work synchronously (DU RX and MT TX for short), that is, data reception of DU and data transmission of MT are performed synchronously; and
DU TX and MT RX work synchronously (DU TX and MT RX for short), that is, data transmission of DU and data reception of MT are performed synchronously.

In some cases, the data transmission of MT and the data reception of DU may be referred to as uplink (Uplink, UL), and the data reception of MT and the data transmission of DU may be referred to as data downlink (Downlink, DL). Therefore, in cases described in this application that MT TX is replaced by MT UL, MT RX is replaced by MT DL, DU TX is replaced by DU DL, and DU RX is replaced by DU UL, the link state switching method of this application can also be implemented.

In addition, the transmission modes may be transmission modes for defining synchronization of various IAB nodes in study for performing timing synchronization on the IAB nodes based on synchronization rules, for example, seven cases (which are corresponding to seven transmission modes or seven timing modes) for synchronization of the IAB nodes are defined in a study stage of R16. The transmission modes in the present invention include but are not limited to transmission modes corresponding to the seven cases defined by R16. Cases 1, 6, and 7 are specifically described herein below.

In case 1 (that is, case 1), DU TX of an IAB node is aligned with TX timing of an IAB parent node in time domain units (in this case, the IAB parent node may be a base station) or DU TX is aligned with DU TX timing of an IAB parent node in time domain units (in this case, the IAB parent node may be an IAB node), where the IAB parent node is a parent node of the IAB node.

In case 6 (that is, case 6), MT TX and DU TX of an IAB node are aligned in time domain units or MT TX and DU TX work synchronously (that is, MT and DU transmit data synchronously); and DU TX of an IAB node is aligned with TX timing of an IAB parent node in time domain units or DU TX of an IAB node is aligned with DU TX timing of an IAB parent node in time domain units.

In case 7 (that is, case 7), MT RX and DU RX of an IAB node are aligned in time domain units or MT RX and DU RX work synchronously; and DU RX of an IAB node is aligned with RX timing of an IAB parent node in time domain units or DU RX of an IAB node is aligned with DU RX timing of an IAB parent node in time domain units, or the like.

The time domain unit may be any one of a symbol (Symbol), a symbol set, a slot (slot), a subframe (subFrame), a frame (Frame), a microsecond, a millisecond, a second, and the like. It should be noted that in various cases for synchronization of the IAB nodes, various time domain units may be different or the same. For example, in case 6, MT TX and DU TX may be aligned in symbols (that are time domain units in which MT TX and DU TX are aligned), and DU TX is aligned with TX timing of the IAB parent node in slots (that are time domain units in which DU TX is aligned with TX timing of the IAB parent node); or MT TX and DU TX may also be aligned in symbols, and DU TX may also be aligned with TX timing of the IAB parent node in symbols.

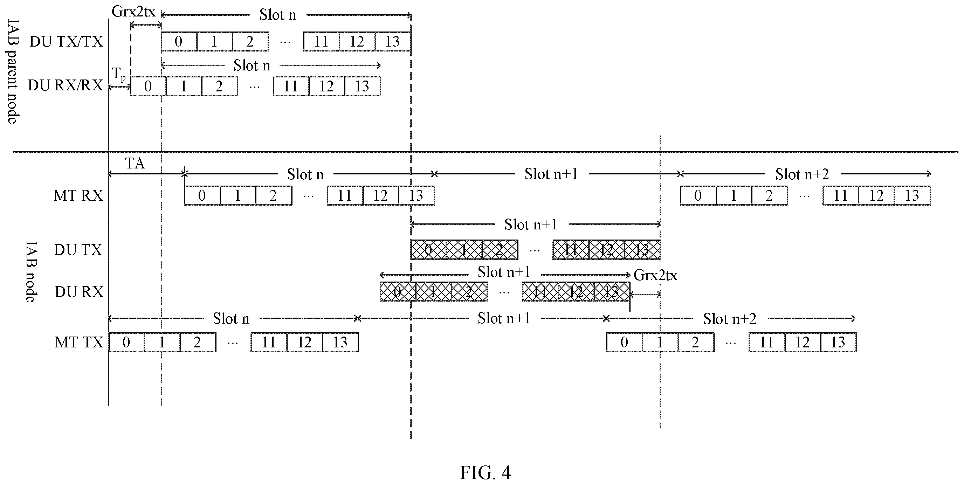

In addition, in the study for performing timing synchronization based on the synchronization rules, TA can be obtained according to the synchronization rules, and timing of the IAB node is adjusted according to TA. For example, in case 1 shown in FIG. 4, the IAB parent node (which may be a donor IAB node or a previous-hop IAB node) notifies the IAB node of a time difference T_delta between DU RX/RX and DU TX/TX (which may also be considered as a time difference between UL and DL) and applies the time difference to DU TX of the IAB node, and DU TX of the IAB node adjusts timing of the IAB node according to a MT RX reception time, where a timing advance referred to as TA of DU TX compared to MT RX can be obtained by calculating through a formula (1) as follows:

$$TA=(N_{TA}+N_{TA\_offset})\times Tc/2+T\_delta \qquad (1)$$

where $N_{TA\_offset}$ is a parameter indicated by radio resource control (Radio Resource Control, RRC) or a value configured by default;

$T_c$ is a minimum time unit; and
$N_{TA}$ can be obtained through two manners as follows.

Manner 1: A random access response (random access response, RAR) carries 12 bits information, indicating that TA=0, 1, 2, ..., 3846; and $N_{TA}=TA\times16\times64/2^u$ is obtained based on an indication value, where u represents an SCS parameter.

Manner 2: A medium access control control element (Medium Access Control Control Element, MAC CE) carries 6 bits indication information, indicating that TA=0, 1, 2, ..., 63; $N_{TA\_new}=N_{TA\_old}+(T_A-31)\times16\times64/2^u$ is obtained based on an indication value, where $N_{TA\_old}$ is a previous TA value; and a new TA value is obtained by adjusting according to an indication of MAC CE.

In this application, the first link state may be a link state in any one of various defined transmission modes. Specifically, the first link state may be a link state in a first transmission mode, and the first transmission mode satisfies: MT TX and DU TX are aligned in time domain units or MT TX and DU TX work synchronously; and DU TX is aligned with TX timing of an IAB parent node in time domain units or DU TX is aligned with DU TX timing of the IAB parent node in time domain units, where the IAB parent node is a parent node of the IAB node, that is, the first transmission mode is a transmission mode of case 6.

The second link state may also be a link state in any one of various defined transmission modes, and a transmission mode of the second link state is different from that of the first link state. Specifically, the second link state is a link state in a second transmission mode, and the second transmission mode satisfies: DU TX is aligned with TX timing of an IAB parent node in time domain units or DU TX is aligned with DU TX timing of the IAB parent node in time domain units, where the IAB parent node is a parent node of the IAB node, that is, the second transmission mode is a transmission mode of case 1.

In addition, the first link state and the second link state are link states in two different transmission modes; the first link state and the second link state may be at least one of MT TX, MT RX, DU TX, and DU RX; and the first link state and the second link state may be the same or different link states.

For example, the first link state is MT TX in the first transmission mode, and the second link state is MT TX in the second transmission mode, that is, the first link state and the second link state are the same in link states but different in transmission modes; or the first link state is DU TX in the first transmission mode, and the second link state is MT TX in the second transmission mode, that is, the first link state and the second link state are different in link states and transmission modes.

In this application, the switching between the first link state and the second link state may be switching from the first link state to the second link state or may be switching from the second link state to the first link state.

The first guard period may include one or more guard periods, and each guard period corresponds to one link switching case. However, in a case that there are a plurality of guard periods, different guard periods of the first guard period are for: switching between different first link states and the second link state and/or switching between the first link state and different second link states. It should be understood that the different guard periods may be different types of guard periods and are not limited to guard periods with different durations, and durations of the plurality of guard periods may be the same or different. This is not limited herein.

Specifically, the switching between the first link state and the second link state may be switching between link states in the first transmission mode and the second transmission mode, including any one of the following implementations.

Implementation 1: switching from the first link state to the second link state in a case that the first link state is at least one of MT TX and DU TX and the second link state is MT TX.

Implementation 2: switching from the second link state to the first link state in a case that the first link state is at least one of MT TX and DU TX and the second link state is MT TX.

Implementation 3: switching from the first link state to the second link state in a case that the first link state is at least one of MT TX and DU TX and the second link state is MT RX.

Implementation 4: switching from the second link state to the first link state in a case that the first link state is at least one of MT TX and DU TX and the second link state is MT RX.

Implementation 5: switching from the first link state to the second link state in a case that the first link state is at least one of MT TX and DU TX and the second link state is DU TX.

Implementation 6: switching from the second link state to the first link state in a case that the first link state is at least one of MT TX and DU TX and the second link state is DU TX.

Implementation 7: switching from the first link state to the second link state in a case that the first link state is at least one of MT TX and DU TX and the second link state is DU RX.

Implementation 8: switching from the second link state to the first link state in a case that the first link state is at least one of MT TX and DU TX and the second link state is DU RX.

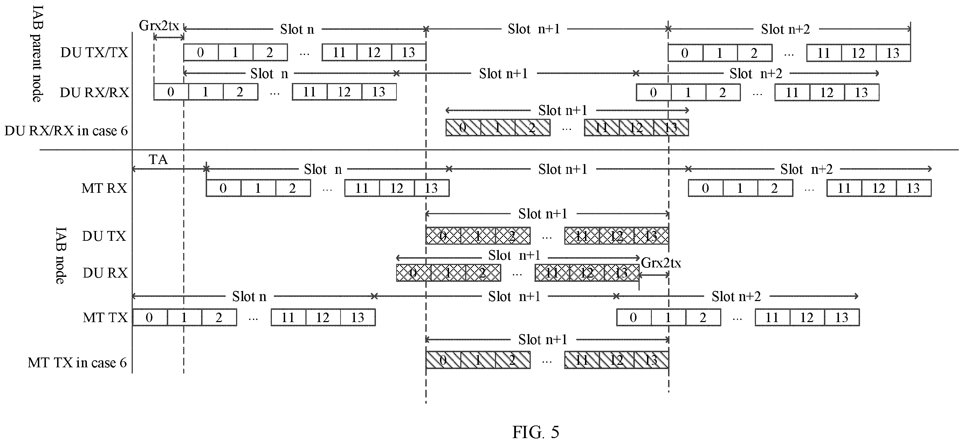

For example, as shown in FIG. 5, the IAB node performs data transmission at a slot (Slot) n by using MT RX of case 1 and performs data transmission synchronously at a Slot n+1 by using MT TX and DU TX of case 6. In this case, the IAB node transmits switching between link states from the (Slot) n to the Slot n+1, that is, the second link state of MT RX is switched to the first link state of MT TX and DU TX.

In this application, the switching between the first link state and the second link state based on the first guard period can be understood as that the IAB node does not perform data transmission in the first guard period in a case that the IAB node switches between the first link state and the second link state. It should be noted that a time unit of the first guard period may be a symbol, a slot, a subframe, a half-frame, a frame, a microsecond, a millisecond, a second, and the like.

The first guard period is a provided guard symbol parameter (Guard-Symbols Provided) and is used to indicate the number of unusable symbols (or referred to as the number of guard symbols) for the IAB node, that is, data transmission is not performed in the number of unusable symbols indicated by the first guard period (which may be the number of unusable symbols for the IAB node in some link states).

In addition, the first guard period may include one or more guard periods, and each guard period may apply to switching between link states corresponding to the guard period. Specifically, in a case that the switching between the link states in the first transmission mode and the second transmission mode includes Implementations 1 to 8, the first guard period may include at least one of the following:

a guard period for switching from a first link state of MT TX and/or DU TX to a second link state of MT TX, which is a guard period corresponding to Implementation 1;
a guard period for switching from a first link state of MT TX and/or DU TX to a second link state of MT RX, which is a guard period corresponding to Implementation 3;
a guard period for switching from a second link state of MT TX to a first link state of MT TX and/or DU TX, which is a guard period corresponding to Implementation 2;
a guard period for switching from a second link state of MT RX to a first link state of MT TX and/or DU TX, which is a guard period corresponding to Implementation 4;
a guard period for switching from a first link state of MT TX and/or DU TX to a second link state of DU TX, which is a guard period corresponding to Implementation 5;
a guard period for switching from a first link state of MT TX and/or DU TX to a second link state of DU RX, which is a guard period corresponding to Implementation 7;
a guard period for switching from a second link state of DU TX to a first link state of MT TX and/or DU TX, which is a guard period corresponding to Implementation 6; and
a guard period for switching from a second link state of DU RX to a first link state of MT TX and/or DU TX, which is a guard period corresponding to Implementation 8.

The guard periods corresponding to the Implementations 1 to 8 may be the same or different values predefined according to actual situations. Specifically, the guard periods may include at least one of the following:

a guard period for switching from a second link state of MT TX to a first link state of MT TX and/or DU TX being 0;

a guard period for switching from a first link state of MT TX and/or DU TX to a second link state of DU TX being 0; and

a guard period for switching from a second link state of DU TX to a first link state of MT TX and/or DU TX being 0.

In some implementations, the first guard period is defined by a protocol or configured by first signaling.

In addition, the first relay device may be an IAB node, or the first relay device may also be a CU or an IAB parent node. This is not limited herein.

Specifically, the first signaling may include at least one of the following:

signaling with which the IAB node reports first information to a centralized unit CU or an IAB parent node; or

signaling with which the CU or the IAB parent node configures first information for the IAB node, where

the first information includes the first guard period or information associated with the first guard period.

For example, in a process of configuring a first guard period for an IAB node through signaling, the IAB node may obtain guard periods corresponding to switching of at least one link state (that is, associate such link state with the first guard period) and transmits the obtained guard period to a CU or an IAB parent node through signaling (that is, signaling with which the IAB node reports the guard period to the centralized unit CU or the IAB parent node). In response to the received signaling, the CU or the IAB parent node also obtains guard periods (which may be the same as or different from a link state obtained by the IAB node) corresponding to switching of at least one link state (that is, a first guard period) and transmits the obtained guard period to the IAB node through signaling (that is, signaling with which the CU or the IAB parent node configures a guard period for the IAB node), so as to configure the first guard period for the IAB node by the CU or the IAB parent node.

It should be noted that the first guard period may be a specific value predefined by a protocol or configured by signaling. For example, for switching between MT TX or MT RX and DU TX or DU RX, 8 guard periods (that are G1 to G8) shown in Table 1 below may be defined by a protocol, and a value of each guard period may be 0-4 symbols. Certainly, values of the guard periods may also be greater than 4. This is not limited herein.

**Table 1 Guard periods defined by protocol**

| MT to DU | DU TX | DU RX |
|---|---|---|
| MT RX | $G_1$ | $G_2$ |
| MT TX | $G_3$ | $G_4$ |
| DU to MT | MT RX | MT TX |
| DUTX | $G_5$ | $G_6$ |
| DURX | $G_7$ | $G_8$ |

Alternatively, the values of the guard periods may also be values defined by a protocol or indicated by signaling according to preset rules. Specifically, the first guard period is associated with a second guard period. The second guard period is a guard period set for switching between the second link state and a third link state. The third link state and the second link state are link states under a same transmission mode. Herein, the second guard period may be defined by a protocol or configured by signaling.

The first guard period being associated with the second guard period may be defined by a protocol or configured by signaling; and the first guard period being associated with the second guard period can be understood as that part or all guard periods in the first guard period are the same as part or all guard periods in the second guard period.

For example, provided that a first guard period includes a guard period 1 and a guard period 2 for switching from a link state (that is, a first link state) in case 6 to a link state (that is, a second link state) in case 1, a second guard period includes a guard period 3 for switching two link states in case 1 (that is, the third link state and the second link state are link states in case 1), where the guard period 1 or 2 being equal to the guard period 3 may be defined by a protocol or configured by signaling.

It should be noted that in a case that part of guard periods in the first guard period are the same as guard periods in the second guard periods, other guard periods in the first guard period may be specific values defined by a protocol or configured by signaling. This is not limited herein.

In addition, the guard periods in the first guard period being equal to the guard periods in the second guard period may be defined by a protocol or configured by signaling according to actual needs. Specifically, in some implementations, the first guard period being associated with the second guard period may include at least one of the following:

a guard period for switching from a first link state of MT TX and/or DU TX to a second link state of MT TX in the first guard period is equal to a guard period for switching from a second link state of DU TX to a third link state of MT TX in the second guard period, for example, a guard period for switching from MT TX in case 6 to MT TX in case 1 is equal to a guard period for switching from DU TX in case 1 to MT TX in case 1;

a guard period for switching from a first link state of MT TX and/or DU TX to a second link state of MT RX in the first guard period is equal to a guard period for switching from a second link state of DU TX to a third link state of MT RX in the second guard period, for example, a guard period for switching from MT TX in case 6 to MT RX in case 1 is equal to a guard period for switching from DU TX in case 1 to MT RX in case 1;

a guard period for switching from a second link state of MT RX to a first link state of MT TX and/or DU TX in the first guard period is equal to a guard period for switching from a second link state of MT RX to a third link state of DU TX in the second guard period, for example, a guard period for switching from MT RX in case 1 to MT TX in case 6 is equal to a guard period for switching from MT RX in case 1 to DU TX in case 1;

a guard period for switching from a second link state of MT TX to a first link state of MT TX and/or DU TX in the first guard period is equal to a guard period for switching from a second link state of MT TX to a third link state of DU TX in the second guard period, for example, a guard period for switching from MT TX in case 1 to MT TX in case 6 is equal to a guard period for switching from MT TX in case 1 to DU TX in case 1;

a guard period for switching from a first link state of MT TX and/or DU TX to a second link state of DU TX in the first guard period is equal to a guard period for switching from a second link state of MT TX to a third link state of DU TX in the second guard period, for example, a guard period for switching from MT TX in case 6 to DU TX in case 1 is equal to a guard period for switching from MT TX in case 1 to DU TX in case 1;

a guard period for switching from a first link state of MT TX and/or DU TX to a second link state of DU RX in the first guard period is equal to a guard period for switching from a second link state of MT TX to a third link state of DU RX in the second guard period, for example, a guard period for switching MT TX in case 6 to DU RX in case 1 is equal to a guard period for switching from MT TX in case 1 to DU RX in case 1;

a guard period for switching from a second link state of DU RX to a first link state of MT TX and/or DU TX in the first guard period is equal to a guard period for switching from a second link state of DU RX to a third link state of MT TX in the second guard period, for example, a guard period for switching from DU RX in case 1 to MT TX in case 6 is equal to a guard period for switching from DU RX in case 1 to MT TX in case 1; and

a guard period for switching from a second link state of DU TX to a first link state of MT TX and/or DU TX in the first guard period is equal to a guard period for switching from a second link state of DU TX to a third link state of MT TX in the second guard period, for example, a guard period for switching from DU TX in case 1 to MT TX in case 6 is equal to a guard period for switching from DU TX in case 1 to MT TX in case 1.

In this application, for switching between the first link state and the second link state based on the first guard period, an object to which the first guard period applies may be defined by a protocol or configured by a network device, a CU, or an IAB parent node, so that the object to which the first guard period applies does not perform data transmission in the first guard period.

The first guard period may apply to MT or DU of an IAB node. Specifically, the object to which the first guard period applies includes at least one of the following:

MT in the first link state;
MT in the second link state;
DU in the first link state; and
DU in the second link state.

For example, as shown in FIG. 5, in a case that the IAB node switches from a first link state of MT RX to a second link state of MT TX and DU TX, the object to which the first guard period applies may be at least one of MT in MT TX and DU in DU TX; or the object to which the first guard period applies may be MT in MT RX.

More specifically, in a case that the first guard period is for switching between a first link state of MT TX and/or DU TX and a second link state of MT TX or MT RX, the first guard period applies to MT or DU in the first link state.

For example, in the case as shown in FIG. 5, the object to which the first guard period applies may be at least one of MT in MT TX and DU in DU TX.

More specifically, the first guard period satisfies at least one of the following:

in a case that the first guard period is for switching between a first link state of MT TX and/or DU TX and a second link state of MT TX, the first guard period applies to MT in the second link state of MT TX;

in a case that the first guard period is for switching between a first link state of MT TX and/or DU TX and a second link state of MT RX, the first guard period applies to MT in the second link state of MT RX;

in a case that the first guard period is for switching between a first link state of MT TX and/or DU TX and a second link state of DU TX, the first guard period applies to MT and/or DU in the first link state of MT TX and/or DU TX, for example, in a case that the first guard period is for switching between a first link state of MT TX and a second link state of DU TX, the first guard period applies to MT in the first link state of MT TX; in a case that the first guard period is for switching between a first link state of DU TX and a second link state of DU TX, the first guard period applies to DU in the first link state of DU TX; in a case that the first guard period is for switching between a first link state of MT TX and DU TX and a second link state of DU TX, the first guard period applies to MT and DU in the first link state of MT TX and DU TX; and

in a case that the first guard period is for switching between a first link state of MT TX and/or DU TX and a second link state of DU RX, the first guard period applies to MT and/or DU in the first link state of MT TX and/or DU TX.

It should be noted that the object to which the first guard period applies being configured by the network device, the CU, or the IAB parent node may be an object to which the first guard period applies being configured by first signaling or may be an object to which the first guard period applies being configured by another signaling. This is not limited herein.

In addition, the first guard period may also be defined by the protocol or configured by the network device, the CU or the IAB parent node to apply to a time period of the applied-to object. Specifically, the first guard period applies to a start time period or an end time period of a link state of the applied-to object.

It should be noted that the first guard period applying to the start time period or the end time period of the link state of the applied-to object may be defined or configured according to switching cases of different link states. Specifically, in a case that the first guard period is for switching from a first link state of MT TX and/or DU TX to a second link state of MT TX or MT RX, the first guard period applies to an end time period of the first link state of MT TX and/or DU TX; or in a case that the first guard period is for switching from a second link state of MT TX or MT RX to a first link state of MT TX and/or DU TX, the first guard period applies to a start time period of the first link state of MT TX and/or DU TX.

For example, as shown in FIG. 5, in a case that the IAB node switches from a first link state of MT RX to a second link state of MT TX and DU TX, if the object to which the first guard period applies is MT in MT TX and DU in DU TX and the first guard period includes a guard period 1 for switching from MT RX to MT TX and a guard period 2 for switching from MT RX to DU TX, MT does not transmit data in the guard period 1 of the start time period in symbols 0 to 13 and DU does not transmit data in the guard period 2 of the start time period in symbols 0 to 13 when the IAB node transmits data on Slot n+1. Specifically, if the guard period 1 is 2 symbols and the guard period 2 is 3 symbols, MT does not perform TX in symbols 0 and 1, and DU does not perform TX in symbols 0 to 2.

In this embodiment, the switching between the first link state and the second link state based on the first guard period may be performed by an IAB node including MT and DU or be performed by a donor IAB node including only DU. This is not limited herein.

In addition, the first guard period being defined by the protocol or configured by the signaling may be defined or configured only in a case that the first relay device supports both a transmission mode of a first link state and a transmission mode of a second link state. MT and DU can transmit or receive synchronously, or one of MT and DU transmits and the other receives, so that frequency division multiplexing (Frequency Division Multiplexing, FDM) or spatial division multiplexing (Spatial Division Multiplexing, SDM) can be performed between MT and DU, thereby reducing resource overheads.

Specifically, in a case that the first relay device is the IAB node, the method further includes:

transmitting second signaling to an IAB parent node or a CU, where
the second signaling is used to indicate whether the IAB node supports a first transmission mode and a second transmission mode, or indicate configurations of the first transmission mode and the second transmission mode.

Herein, the IAB node can report, to the parent node or the CU, whether two transmission modes (that are the first transmission mode and the second transmission mode) or configurations of the two transmission modes are supported, so as to assist the parent node or the CU to configure the first guard period for the IAB node.

The second signaling may be any signaling that can be transmitted by the IAB node to the CU or the parent node. Specifically, the second signaling may include at least one of the following:

higher layer or physical layer signaling, radio resource control (Radio Resource Control, RRC) signaling, MAC CE signaling, downlink control information (Downlink Control Information, DCI) signaling, backhaul application protocol control protocol data unit (Backhaul Application Protocol control Protocol Data unit, BAP control PDU), physical downlink control channel (Physical downlink control channel, PDCCH), and the like.

In some implementations, in a case that the first relay device is an IAB node, the IAB node can report at least one of a DU RX offset and a time at which the DU RX offset occurs. This can prevent the DU RX offset of the IAB node from occurring and causing interference on scheduling of the IAB parent node or the CU, thereby further improving stability of data transmission.

During data transmission, the IAB node can report the DU RX offset and the time at which the DU RX offset occurs that are configured for the IAB node to the parent node or the CU through signaling. The signaling with which the IAB node implements report may be at least one of high layer or physical layer signaling, RRC signaling, MAC CE signaling, DCI signaling, and BAP control PDU signaling, and the like. It should be noted that the signaling may be the same as or different from signaling with which the IAB node reports the first guard period or information associated with the first guard period to the IAB parent node or the CU.

In addition, the time at which the DU RX offset occurs may be a slot, a subslot (subslot), an uplink symbol (UL symbol), or the like at which the DU RX offset occurs.

It should be noted that for configuring a switching period between link states of the IAB node, an independent switching period is configured for switching between a link state corresponding to a time period with the DU RX offset and other link states, that is, the independent switching period is independent of a switching period for switching between a link state corresponding to a time period without the DU RX offset and other link states.

In some implementations, the IAB parent node is configured with a first offset associated with the first guard period.

Herein, the IAB parent node is configured with the first offset, so that the IAB parent node is able to configure the first offset for the IAB node, and therefore the IAB node is able to switch between the first link state and the second link state based on the first guard period and the first offset, for example, the IAB node is able to switch between the first link state and the second link state based on a sum of the first guard period and the first offset. This can prevent the DU RX offset of the IAB parent node from occurring and causing interference on scheduling of the IAB node, thereby further improving stability of data transmission.

The first offset associated with the first guard period is a guard period additionally set for switching at least one link state associated with the first guard period. Specifically, the first offset includes at least one of the following:

a guard period for switching from a first link state of MT TX and/or DU TX to a second link state of MT TX or MT RX, which is a guard period set for MT in the first link state; or

a guard period for switching from a second link state of MT TX or MT RX to a first link state of MT TX and/or DU TX, which is a guard period set for MT in the first link state.

It should be noted that the first offset is a guard time set for MT in the first link state, and the first offset may be set in a position of MT in the first link state according to actual needs. Specifically, the first offset is set in an end time period of MT in the first link state.

In addition, that the IAB parent node configures the first offset associated with the first guard period for the IAB node can be implemented by the IAB node through the first signaling or another signaling, where the first signaling or the another signaling may also be at least one of high layer or physical layer signaling, RRC signaling, MAC CE signaling, DCI signaling, BAP control PDU signaling, PDCCH, and the like.

In this application, the first signaling may be configured with a first indication that is used to indicate whether data transmission is configured with the first guard period. Therefore, during data transmission, the first relay device can dynamically indicate whether a transmission has a guard period through the first indication.

In addition, in a case that the first indication is used to indicate that data transmission is configured with the first guard period, the first indication may be further used to indicate that the first guard period applies to a time period of data transmission. Specifically, the first indication may be further used to indicate that the first guard period applies to a start time period or an end time period of data transmission.

In some implementations, in a cast that the first relay device is the IAB parent node or the CU, the method further includes: transmitting third signaling to a terminal, where the third signaling is used to configure a third guard period for MT TX and/or MT RX of the IAB node or uplink transmission and/or downlink transmission of the terminal, thereby further improving stability of data transmission.

The third signaling may be any signaling that can be transmitted by the IAB parent node or the CU to the terminal. Specifically, the third signaling may include at least one of the following: high layer or physical layer signaling, RRC signaling, MAC CE signaling, DCI signaling, BAP control PDU, PDCCH, and the like.

In addition, the third signaling may be further used for at least one of the following:

configuring a time unit of the third guard period, for example, a slot, a subslot, or a symbol;
configuring a duration of the third guard period; and
configuring a start time period and/or an end time period of MT TX and/or MT RX of the IAB node to which the third guard period applies.

In this implementation, during data transmission, the third signaling may be further used to indicate data transmission to which the third guard period applies, that is, the third signaling may be further used to dynamically indicate whether the third guard period applies to a data transmission.

The third signaling being further used to indicate data transmission to which the third guard period applies may indicate whether data transmission has a guard period through a flag (Flag) in DCI signaling in a case that the third signaling is DCI signaling.

Certainly, in a case that the third signaling is further used to indicate data transmission to which the third guard period applies, the third signaling can also configure or dynamically indicate a duration of the third guard period or configure or dynamically indicate that the third guard period applies to a start time period and/or an end time period of MT TX and/or MT RX of the IAB node.

In addition, the third guard period may be a guard period configured for at least one of uplink transmission and downlink transmission of a terminal. Specifically, the third guard period may be a guard period for puncturing or rate matching of uplink transmission and/or downlink transmission of the terminal.

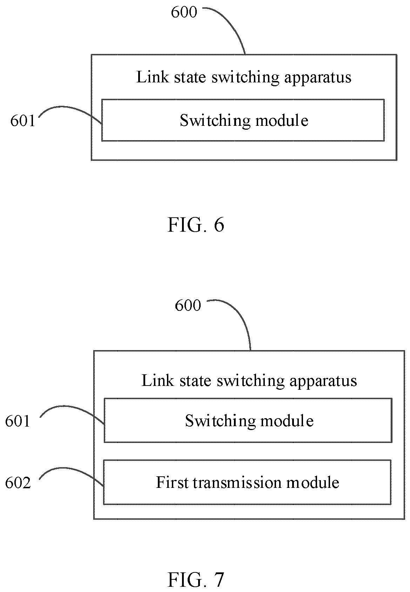

Referring to FIG. 6, FIG. 6 is a link state switching apparatus according to an embodiment of the present invention. The link state switching apparatus is applied to the first relay device. As shown in FIG. 6, the link state switching apparatus 600 includes:

> a switching module 601, configured to switch between a first link state and a second link state based on a first guard period, where
> the first link state and the second link state are link states of an IAB node in different transmission modes.

Optionally, the first link state is a link state in a first transmission mode, and the first transmission mode satisfies:

> mobile termination transmission MT TX and distributed unit transmission DU TX are aligned in time domain units or MT TX and DU TX work synchronously; and
> DU TX is aligned with TX timing of an IAB parent node in time domain units or DU TX is aligned with DU TX timing of the IAB parent node in time domain units, where the IAB parent node is a parent node of the IAB node.

Optionally, the second link state is a link state in a second transmission mode, and the second transmission mode satisfies:
DU TX is aligned with TX timing of an IAB parent node in time domain units or DU TX is aligned with DU TX timing of the IAB parent node in time domain units, where the IAB parent node is a parent node of the IAB node.

Optionally, different guard periods of the first guard period are for: switching between different first link states and the second link state and/or switching between the first link state and different second link states.

Optionally, the first guard period includes at least one of the following:

> a guard period for switching from a first link state of MT TX and/or DU TX to a second link state of MT TX;
> a guard period for switching from a first link state of MT TX and/or DU TX to a second link state of mobile termination reception MT RX;
> a guard period for switching from a second link state of MT TX to a first link state of MT TX and/or DU TX;
> a guard period for switching from a second link state of MT RX to a first link state of MT TX and/or DU TX;
> a guard period for switching from a first link state of MT TX and/or DU TX to a second link state of DU TX;
> a guard period for switching from a first link state of MT TX and/or DU TX to a second link state of distributed unit reception DU RX;
> a guard period for switching from a second link state of DU TX to a first link state of MT TX and/or DU TX; and
> a guard period for switching from a second link state of DU RX to a first link state of MT TX and/or DU TX.

Optionally, the first guard period is defined by a protocol or configured by first signaling.

Optionally, the first signaling includes at least one of the following:

> signaling with which the IAB node reports first information to a centralized unit CU or an IAB parent node; or
> signaling with which the CU or the IAB parent node configures first information for the IAB node, where
> the first information includes the first guard period or information associated with the first guard period.

Optionally, the first guard period is associated with a second guard period. The second guard period is a guard period for switching between the second link state and a third link state. The third link state and the second link state are link states under a same transmission mode.

Optionally, the first guard period being associated with the second guard period includes at least one of the following:

a guard period for switching from a first link state of MT TX and/or DU TX to a second link state of MT TX in the first guard period is equal to a guard period for switching from a second link state of DU TX to a third link state of MT TX in the second guard period;

a guard period for switching from a first link state of MT TX and/or DU TX to a second link state of MT RX in the first guard period is equal to a guard period for switching from a second link state of DU TX to a third link state of MT RX in the second guard period;

a guard period for switching from a second link state of MT RX to a first link state of MT TX and/or DU TX in the first guard period is equal to a guard period for switching from a second link state of MT RX to a third link state of DU TX in the second guard period;

a guard period for switching from a second link state of MT TX to a first link state of MT TX and/or DU TX in the first guard period is equal to a guard period for switching from a second link state of MT TX to a third link state of DU TX in the second guard period;

a guard period for switching from a first link state of MT TX and/or DU TX to a second link state of DU TX in the first guard period is equal to a guard period for switching from a second link state of MT TX to a third link state of DU TX in the second guard period;

a guard period for switching from a first link state of MT TX and/or DU TX to a second link state of DU RX in the first guard period is equal to a guard period for switching from a second link state of MT TX to a third link state of DU RX in the second guard period;

a guard period for switching from a second link state of DU RX to a first link state of MT TX and/or DU TX in the first guard period is equal to a guard period for switching from a second link state of DU RX to a third link state of MT TX in the second guard period; and

a guard period for switching from a second link state of DU TX to a first link state of MT TX and/or DU TX in the first guard period is equal to a guard period for switching from a second link state of DU TX to a third link state of MT TX in the second guard period.

Optionally, an object to which the first guard period applies is defined by a protocol or configured by a network device, a CU, or an IAB parent node.

Optionally, the object to which the first guard period applies includes at least one of the following:

MT in the first link state;
MT in the second link state;
DU in the first link state; and
DU in the second link state.

Optionally, in a case that the first guard period is for switching between a first link state of MT TX and/or DU TX and a second link state of MT TX or MT RX, the first guard period applies to MT or DU in the first link state.

Optionally, the first guard period satisfies at least one of the following:

in a case that the first guard period is for switching between a first link state of MT TX and/or DU TX and a second link state of MT TX, the first guard period applies to MT in the second link state of MT TX;

in a case that the first guard period is for switching between a first link state of MT TX and/or DU TX and a second link state of MT RX, the first guard period applies to MT in the second link state of MT RX;

in a case that the first guard period is for switching between a first link state of MT TX and/or DU TX and a second link state of DU TX, the first guard period applies to MT and/or DU in the first link state of MT TX and/or DU TX; and

in a case that the first guard period is for switching between a first link state of MT TX and/or DU TX and a second link state of DU RX, the first guard period applies to MT and/or DU in the first link state of MT TX and/or DU TX.

Optionally, the first guard period applies to a start time period or an end time period of a link state of the applied-to object.

Optionally, in a case that the first guard period is for switching from a first link state of MT TX and/or DU TX to a second link state of MT TX or MT RX, the first guard period applies to an end time period of the first link state of MT TX and/or DU TX; or

in a case that the first guard period is for switching from a second link state of MT TX or MT RX to a first link state of MT TX and/or DU TX, the first guard period applies to a start time period of the first link state of MT TX and/or DU TX.

Optionally, in a case that the first relay device is the IAB node, as shown in FIG. 7, the apparatus 600 further includes:

a first transmission module 602, configured to transmit second signaling to the IAB parent node or a CU, where the second signaling is used to indicate whether the IAB node supports a first transmission mode and a second transmission mode, or indicate configurations of the first transmission mode and the second transmission mode.

Optionally, in a case that the first relay device is an IAB node, the IAB node reports a DU RX offset and/or a time at which the DU RX occurs.

Optionally, the IAB parent node is configured with a first offset associated with the first guard period.

Optionally, the first signaling is configured with a first indication that is used to indicate whether data transmission is configured with the first guard period.

Optionally, the first indication is further used to indicate that the first guard period applies to a start time period or an end time period of data transmission.

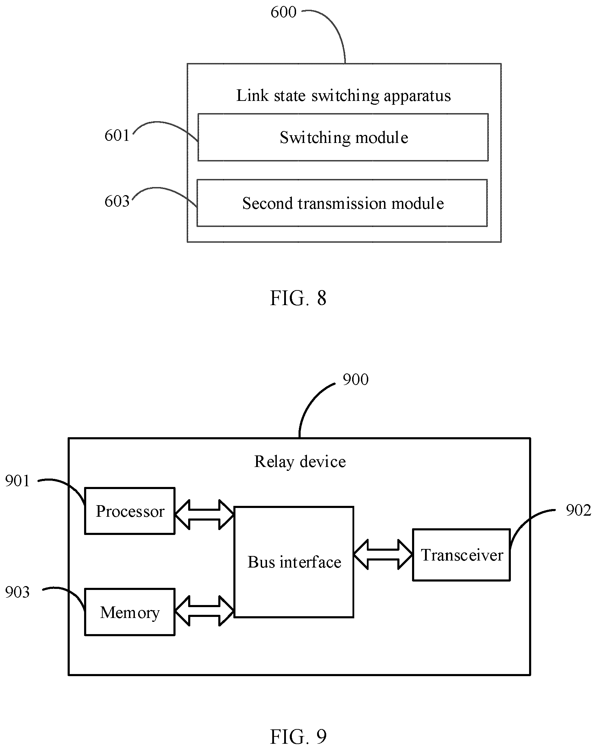

Optionally, in a case that the first relay device is the IAB parent node or the CU, as shown in FIG. 8, the apparatus 600 further includes:

a second transmission module 603, configured to transmit third signaling to a terminal, where
the third signaling is used to configure a third guard period for MT TX and/or MT RX of the IAB node or uplink transmission and/or downlink transmission of the terminal.

Optionally, the third signaling is further used for at least one of the following:

configuring a time unit of the third guard period;
configuring a duration of the third guard period; and
configuring a start time period and/or an end time period of MT TX and/or MT RX of the IAB node to which the third guard period applies.

Optionally, the third signaling includes at least one of the following:
higher layer or physical layer signaling, radio resource control RRC signaling, medium access control control element MAC CE signaling, downlink control information DCI signaling, backhaul application protocol control protocol data unit BAP control PDU, and physical downlink control channel PDCCH.

Optionally, the third guard period is a guard period for puncturing or rate matching of uplink transmission and/or downlink transmission of the terminal.

It should be noted that any implementation of the first relay device in the method embodiments shown in FIG 3 in the embodiments of the present invention can be implemented by the link state switching apparatus 600 in the embodiments of the present invention, with the same beneficial effect achieved. To avoid repetition, details are not described herein again.

FIG. 9 is a structural diagram of a relay device according to an embodiment of the present invention. The relay device may be the first relay device in the method embodiments. As shown in FIG. 9, the relay device 900 includes a processor 901, a transceiver 902, a memory 903, and a bus interface, where
the processor 901 is configured to:

switch between a first link state and a second link state based on a first guard period, where
the first link state and the second link state are link states of an IAB node in different transmission modes.

Optionally, the first link state is a link state in a first transmission mode, and the first transmission mode satisfies:

mobile termination transmission MT TX and distributed unit transmission DU TX are aligned in time domain units or MT TX and DU TX work synchronously; and
DU TX is aligned with TX timing of an IAB parent node in time domain units or DU TX is aligned with DU TX timing of the IAB parent node in time domain units, where the IAB parent node is a parent node of the IAB node.

Optionally, the second link state is a link state in a second transmission mode, and the second transmission mode satisfies:
DU TX is aligned with TX timing of an IAB parent node in time domain units or DU TX is aligned with DU TX timing of the IAB parent node in time domain units, where the IAB parent node is a parent node of the IAB node.

Optionally, different guard periods of the first guard period are for: switching between different first link states and the second link state and/or switching between the first link state and different second link states.

Optionally, the first guard period includes at least one of the following:

a guard period for switching from a first link state of MT TX and/or DU TX to a second link state of MT TX;

a guard period for switching from a first link state of MT TX and/or DU TX to a second link state of mobile termination reception MT RX;

a guard period for switching from a second link state of MT TX to a first link state of MT TX and/or DU TX;

a guard period for switching from a second link state of MT RX to a first link state of MT TX and/or DU TX;

a guard period for switching from a first link state of MT TX and/or DU TX to a second link state of DU TX;

a guard period for switching from a first link state of MT TX and/or DU TX to a second link state of distributed unit reception DU RX;

a guard period for switching from a second link state of DU TX to a first link state of MT TX and/or DU TX; and

a guard period for switching from a second link state of DU RX to a first link state of MT TX and/or DU TX.

Optionally, the first guard period is defined by a protocol or configured by first signaling.

Optionally, the first signaling includes at least one of the following:

signaling with which the IAB node reports first information to a centralized unit CU or an IAB parent node; or

signaling with which the CU or the IAB parent node configures first information for the IAB node, where

the first information includes the first guard period or information associated with the first guard period.

Optionally, the first guard period is associated with a second guard period. The second guard period is a guard period for switching between the second link state and a third link state. The third link state and the second link state are link states under a same transmission mode.

Optionally, the first guard period being associated with the second guard period includes at least one of the following:

a guard period for switching from a first link state of MT TX and/or DU TX to a second link state of MT TX in the first guard period is equal to a guard period for switching from a second link state of DU TX to a third link state of MT TX in the second guard period;

a guard period for switching from a first link state of MT TX and/or DU TX to a second link state of MT RX in the first guard period is equal to a guard period for switching from a second link state of DU TX to a third link state of MT RX in the second guard period;

a guard period for switching from a second link state of MT RX to a first link state of MT TX and/or DU TX in the first guard period is equal to a guard period for switching from a second link state of MT RX to a third link state of DU TX in the second guard period;

a guard period for switching from a second link state of MT TX to a first link state of MT TX and/or DU TX in the first guard period is equal to a guard period for switching from a second link state of MT TX to a third link state of DU TX in the second guard period;

a guard period for switching from a first link state of MT TX and/or DU TX to a second link state of DU TX in the first guard period is equal to a guard period for switching from a second link state of MT TX to a third link state of DU TX in the second guard period;

a guard period for switching from a first link state of MT TX and/or DU TX to a second link state of DU RX in the first guard period is equal to a guard period for switching from a second link state of MT TX to a third link state of DU RX in the second guard period;

a guard period for switching from a second link state of DU RX to a first link state of MT TX and/or DU TX in the first guard period is equal to a guard period for switching from a second link state of DU RX to a third link state of MT TX in the second guard period; and

a guard period for switching from a second link state of DU TX to a first link state of MT TX and/or DU TX in the first guard period is equal to a guard period for switching from a second link state of DU TX to a third link state of MT TX in the second guard period.

Optionally, an object to which the first guard period applies is defined by a protocol or configured by a network device, a CU, or an IAB parent node.

Optionally, the object to which the first guard period applies includes at least one of the following:

MT in the first link state;

MT in the second link state;

DU in the first link state; and

DU in the second link state.

Optionally, in a case that the first guard period is for switching between a first link state of MT TX and/or DU TX and a second link state of MT TX or MT RX, the first guard period applies to MT or DU in the first link state.

Optionally, the first guard period satisfies at least one of the following:

in a case that the first guard period is for switching between a first link state of MT TX and/or DU TX and a second link state of MT TX, the first guard period applies to MT in the second link state of MT TX;

in a case that the first guard period is for switching between a first link state of MT TX and/or DU TX and a second link state of MT RX, the first guard period applies to MT in the second link state of MT RX;

in a case that the first guard period is for switching between a first link state of MT TX and/or DU TX and a second link state of DU TX, the first guard period applies to MT and/or DU in the first link state of MT TX and/or DU TX; and

in a case that the first guard period is for switching between a first link state of MT TX and/or DU TX and a second link state of DU RX, the first guard period applies to MT and/or DU in the first link state of MT TX and/or DU TX.

Optionally, the first guard period applies to a start time period or an end time period of a link state of the applied-to object.

Optionally, in a case that the first guard period is for switching from a first link state of MT TX and/or DU TX to a second link state of MT TX or MT RX, the first guard period applies to an end time period of the first link state of MT TX and/or DU TX; or

in a case that the first guard period is for switching from a second link state of MT TX or MT RX to a first link state of MT TX and/or DU TX, the first guard period applies to a start time period of the first link state of MT TX and/or DU TX.

Optionally, in a case that the first relay device is the IAB node, the processor 901 is further configured to:

transmit second signaling to the IAB parent node or a CU, where

the second signaling is used to indicate whether the IAB node supports a first transmission mode and a second transmission mode, or indicate configurations of the first transmission mode and the second transmission mode.

Optionally, in a case that the first relay device is an IAB node, the IAB node reports a DU RX offset and/or a time at which the DU RX occurs.

Optionally, the IAB parent node is configured with a first offset associated with the first guard period.

Optionally, the first signaling is configured with a first indication that is used to indicate whether data transmission is configured with the first guard period.

Optionally, the first indication is further used to indicate that the first guard period applies to a start time period or an end time period of data transmission.

Optionally, in a case that the first relay device is the IAB parent node or the CU, the processor 901 is further configured to:

transmit third signaling to a terminal, where

the third signaling is used to configure a third guard period for MT TX and/or MT RX of the IAB node or uplink transmission and/or downlink transmission of the terminal.

Optionally, the third signaling is further used for at least one of the following:

configuring a time unit of the third guard period;

configuring a duration of the third guard period; and

configuring a start time period and/or an end time period of MT TX and/or MT RX of the IAB node to which the third guard period applies.

Optionally, the third signaling includes at least one of the following:

higher layer or physical layer signaling, radio resource control RRC signaling, medium access control control element MAC CE signaling, downlink control information DCI signaling, backhaul application protocol control protocol data unit BAP control PDU, and physical downlink control channel PDCCH.

Optionally, the third guard period is a guard period for puncturing or rate matching of uplink transmission and/or downlink transmission of the terminal.

In FIG. 9, a bus architecture may include any quantity of interconnected buses and bridges, and specifically link together various circuits of one or more processors represented by the processor 901 and a memory represented by the memory 903. The bus architecture may further link together various other circuits such as a peripheral device, a voltage regulator, and a power management circuit, which are well known in the art and therefore are not further described herein. The bus interface provides an interface. The transceiver 902 may be a plurality of components, that is, the transceiver 902 includes a transmitter and a receiver, and provides a unit for communicating with various other apparatuses on a transmission medium. For different terminals, a user interface 904 may also be an interface that can be externally or internally connected to a required device. The connected device includes but is not limited to a keypad, a display, a speaker, a microphone, a joystick, and the like.

The processor 901 is responsible for bus architecture management and general processing. The memory 903 may store data used when the processor 901 performs an operation.

It should be noted that the relay device 900 in this embodiment may be a first relay device in any implementation of the method embodiments in the embodiments of the present invention. Any implementation of the first relay device in the method embodiments in the embodiments of the present invention can be implemented by the relay device 900 in this embodiment, with the same beneficial effect achieved. Details are not described herein again.

An embodiment of the present invention further provides a computer-readable storage medium, where a computer program is stored in the computer-readable storage medium. When the computer program is executed by a processor, the processes of the foregoing embodiment corresponding to the first relay device can be implemented, with the same technical effects achieved. To avoid repetition, details are not described herein again. The computer-readable storage medium is, for example, a read-only memory (Read-Only Memory, ROM), a random access memory (Random Access Memory, RAM), a magnetic disk, or an optical disc.

An embodiment of this application further provides a chip. The chip includes a processor and a communications interface, where the communications interface and the processor are coupled, the processor is configured to run programs or instructions to implement the processes of the foregoing embodiments of the link state switching method, with the same beneficial effect achieved. To avoid repetition, details are not described herein again.

It should be understood that the chip provided in this embodiment of this application may also be referred to as a system-level chip, a system on chip, a chip system, a system-on-a-chip, or the like.

It may be understood that the embodiments described in this disclosure may be implemented by hardware, software, firmware, middleware, microcode, or a combination thereof. For hardware implementation, a module, a unit, a sub-module, a sub-unit, or the like may be implemented in one or more application-specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this application, or a combination thereof.

It should be noted that, in this specification, the terms "include", "comprise", or any of their variants are intended to cover a non-exclusive inclusion, so that a process, a method, an article, or an apparatus that includes a series of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of the present invention essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of the present invention.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention is subject to the protection scope of the claims.

**Claims**

1. A link state switching method, applied to a first relay device, comprising:

   switching between a first link state and a second link state based on a first guard period, wherein
   the first link state and the second link state are link states of an integrated access backhaul IAB node in different transmission modes.

2. The method according to claim 1, wherein the first link state is a link state in a first transmission mode, and the first transmission mode satisfies:

mobile termination transmission MT TX and distributed unit transmission DU TX are aligned in time domain units or MT TX and DU TX work synchronously; and
DU TX is aligned with TX timing of an IAB parent node in time domain units or DU TX is aligned with DU TX timing of the IAB parent node in time domain units, wherein the IAB parent node is a parent node of the IAB node.

3. The method according to claim 1, wherein the second link state is a link state in a second transmission mode, and the second transmission mode satisfies:
DU TX is aligned with TX timing of an IAB parent node in time domain units or DU TX is aligned with DU TX timing of the IAB parent node in time domain units, wherein the IAB parent node is a parent node of the IAB node.

4. The method according to claim 1, wherein different guard periods of the first guard period are for: switching between different first link states and the second link state, and/or switching between the first link state and different second link states.

5. The method according to claim 4, wherein the first guard period comprises at least one of the following:

a guard period for switching from a first link state of MT TX and/or DU TX to a second link state of MT TX;
a guard period for switching from a first link state of MT TX and/or DU TX to a second link state of mobile termination reception MT RX;
a guard period for switching from a second link state of MT TX to a first link state of MT TX and/or DU TX;
a guard period for switching from a second link state of MT RX to a first link state of MT TX and/or DU TX;
a guard period for switching from a first link state of MT TX and/or DU TX to a second link state of DU TX;
a guard period for switching from a first link state of MT TX and/or DU TX to a second link state of distributed unit reception DU RX;
a guard period for switching from a second link state of DU TX to a first link state of MT TX and/or DU TX; and
a guard period for switching from a second link state of DU RX to a first link state of MT TX and/or DU TX.

6. The method according to claim 1, wherein the first guard period is defined by a protocol or configured by first signaling.

7. The method according to claim 6, wherein the first signaling comprises at least one of the following:

signaling with which the IAB node reports first information to a centralized unit CU or an IAB parent node; or
signaling with which the CU or the IAB parent node configures first information for the IAB node, wherein
the first information comprises the first guard period or information associated with the first guard period.

8. The method according to claim 1, wherein the first guard period is associated with a second guard period, the second guard period is a guard period set for switching between the second link state and a third link state, and the third link state and the second link state are link states under a same transmission mode.

9. The method according to claim 8, wherein the first guard period being associated with the second guard period comprises at least one of the following:

a guard period for switching from a first link state of MT TX and/or DU TX to a second link state of MT TX in the first guard period is equal to a guard period for switching from a second link state of DU TX to a third link state of MT TX in the second guard period;
a guard period for switching from a first link state of MT TX and/or DU TX to a second link state of MT RX in the first guard period is equal to a guard period for switching from a second link state of DU TX to a third link state of MT RX in the second guard period;
a guard period for switching from a second link state of MT RX to a first link state of MT TX and/or DU TX in the first guard period is equal to a guard period for switching from a second link state of MT RX to a third link state of DU TX in the second guard period;
a guard period for switching from a second link state of MT TX to a first link state of MT TX and/or DU TX in the first guard period is equal to a guard period for switching from a second link state of MT TX to a third link state of DU TX in the second guard period;
a guard period for switching from a first link state of MT TX and/or DU TX to a second link state of DU TX in the first guard period is equal to a guard period for switching from a second link state of MT TX to a third link state of DU TX in the second guard period;

a guard period for switching from a first link state of MT TX and/or DU TX to a second link state of DU RX in the first guard period is equal to a guard period for switching from a second link state of MT TX to a third link state of DU RX in the second guard period;

a guard period for switching from a second link state of DU RX to a first link state of MT TX and/or DU TX in the first guard period is equal to a guard period for switching from a second link state of DU RX to a third link state of MT TX in the second guard period; and

a guard period for switching from a second link state of DU TX to a first link state of MT TX and/or DU TX in the first guard period is equal to a guard period for switching from a second link state of DU TX to a third link state of MT TX in the second guard period.

10. The method according to claim 1, wherein an object to which the first guard period applies is defined by a protocol or configured by a network device, a CU, or an IAB parent node.

11. The method according to claim 10, wherein the object to which the first guard period applies comprises at least one of the following:

MT in the first link state;
MT in the second link state;
DU in the first link state; and
DU in the second link state.

12. The method according to claim 11, wherein in a case that the first guard period is for switching between a first link state of MT TX and/or DU TX and a second link state of MT TX or MT RX, the first guard period applies to MT or DU in the first link state.

13. The method according to claim 11, wherein the first guard period satisfies at least one of the following:

in a case that the first guard period is for switching between a first link state of MT TX and/or DU TX and a second link state of MT TX, the first guard period applies to MT in the second link state of MT TX;
in a case that the first guard period is for switching between a first link state of MT TX and/or DU TX and a second link state of MT RX, the first guard period applies to MT in the second link state of MT RX;
in a case that the first guard period is for switching between a first link state of MT TX and/or DU TX and a second link state of DU TX, the first guard period applies to MT and/or DU in the first link state of MT TX and/or DU TX; and
in a case that the first guard period is for switching between a first link state of MT TX and/or DU TX and a second link state of DU RX, the first guard period applies to MT and/or DU in the first link state of MT TX and/or DU TX.

14. The method according to claim 11, wherein the first guard period applies to a start time period or an end time period of a link state of the applied-to object.

15. The method according to claim 14, wherein in a case that the first guard period is for switching from a first link state of MT TX and/or DU TX to a second link state of MT TX or MT RX, the first guard period applies to an end time period of the first link state of MT TX and/or DU TX; or
in a case that the first guard period is for switching from a second link state of MT TX or MT RX to a first link state of MT TX and/or DU TX, the first guard period applies to a start time period of the first link state of MT TX and/or DU TX.

16. The method according to claim 1, wherein in a case that the first relay device is the IAB node, the method further comprises:

transmitting second signaling to an IAB parent node or a CU, wherein
the second signaling is used to indicate whether the IAB node supports a first transmission mode and a second transmission mode, or indicate configurations of the first transmission mode and the second transmission mode.

17. The method according to claim 1, wherein in a case that the first relay device is an IAB node, the IAB node reports a DU RX offset and/or a time at which a DU RX offset occurs.

**18.** The method according to claim 1, wherein an IAB parent node is configured with a first offset associated with the first guard period.

**19.** The method according to claim 6, wherein the first signaling is configured with a first indication that is used to indicate whether data transmission is configured with the first guard period.

**20.** The method according to claim 19, wherein the first indication is further used to indicate that the first guard period applies to a start time period or an end time period of data transmission.

**21.** The method according to claim 1, wherein in a case that the first relay device is an IAB parent node or a CU, the method further comprises:

transmitting third signaling to a terminal, wherein
the third signaling is used to configure a third guard period for MT TX and/or MT RX of the IAB node or uplink transmission and/or downlink transmission of the terminal.

**22.** The method according to claim 21, wherein the third signaling is further used for at least one of the following:

configuring a time unit of the third guard period;
configuring a duration of the third guard period; and
configuring a start time period and/or an end time period of MT TX and/or MT RX of the IAB node to which the third guard period applies.

**23.** The method according to claim 21, wherein the third signaling comprises at least one of the following:
higher layer or physical layer signaling, radio resource control RRC signaling, medium access control control element MAC CE signaling, downlink control information DCI signaling, backhaul application protocol control protocol data unit BAP control PDU, and physical downlink control channel PDCCH.

**24.** The method according to claim 21, wherein the third guard period is a guard period for puncturing or rate matching of uplink transmission and/or downlink transmission of the terminal.

**25.** A link state switching apparatus, applied to a first relay device, comprising:

a switching module, configured to switch between a first link state and a second link state based on a first guard period, wherein
the first link state and the second link state are link states of an IAB node in different transmission modes.

**26.** The apparatus according to claim 25, wherein the first link state is a link state in a first transmission mode, and the first transmission mode satisfies:

mobile termination transmission MT TX and distributed unit transmission DU TX are aligned in time domain units or MT TX and DU TX work synchronously; and
DU TX is aligned with TX timing of an IAB parent node in time domain units or DU TX is aligned with DU TX timing of the IAB parent node in time domain units, wherein the IAB parent node is a parent node of the IAB node.

**27.** The apparatus according to claim 25, wherein the second link state is a link state in a second transmission mode, and the second transmission mode satisfies:
DU TX is aligned with TX timing of an IAB parent node in time domain units or DU TX is aligned with DU TX timing of the IAB parent node in time domain units, wherein the IAB parent node is a parent node of the IAB node.

**28.** The apparatus according to claim 25, wherein different guard periods of the first guard period are for: switching between different first link states and the second link state, and/or switching between the first link state and different second link states.

**29.** The apparatus according to claim 28, wherein the first guard period comprises at least one of the following:

a guard period for switching from a first link state of MT TX and/or DU TX to a second link state of MT TX;
a guard period for switching from a first link state of MT TX and/or DU TX to a second link state of mobile termination reception MT RX;
a guard period for switching from a second link state of MT TX to a first link state of MT TX and/or DU TX;
a guard period for switching from a second link state of MT RX to a first link state of MT TX and/or DU TX;
a guard period for switching from a first link state of MT TX and/or DU TX to a second link state of DU TX;
a guard period for switching from a first link state of MT TX and/or DU TX to a second link state of distributed unit reception DU RX;
a guard period for switching from a second link state of DU TX to a first link state of MT TX and/or DU TX; and
a guard period for switching from a second link state of DU RX to a first link state of MT TX and/or DU TX.

30. The apparatus according to claim 25, wherein the first guard period is defined by a protocol or configured by first signaling.

31. The apparatus according to claim 30, wherein the first signaling comprises at least one of the following:

signaling with which the IAB node reports first information to a centralized unit CU or an IAB parent node; or
signaling with which the CU or the IAB parent node configures first information for the IAB node, wherein the first information comprises the first guard period or information associated with the first guard period.

32. The apparatus according to claim 25, wherein the first guard period is associated with a second guard period, the second guard period is a guard period set for switching between the second link state and a third link state, and the third link state and the second link state are link states under a same transmission mode.

33. The apparatus according to claim 32, wherein the first guard period being associated with the second guard period comprises at least one of the following:

a guard period for switching from a first link state of MT TX and/or DU TX to a second link state of MT TX in the first guard period is equal to a guard period for switching from a second link state of DU TX to a third link state of MT TX in the second guard period;
a guard period for switching from a first link state of MT TX and/or DU TX to a second link state of MT RX in the first guard period is equal to a guard period for switching from a second link state of DU TX to a third link state of MT RX in the second guard period;
a guard period for switching from a second link state of MT RX to a first link state of MT TX and/or DU TX in the first guard period is equal to a guard period for switching from a second link state of MT RX to a third link state of DU TX in the second guard period;
a guard period for switching from a second link state of MT TX to a first link state of MT TX and/or DU TX in the first guard period is equal to a guard period for switching from a second link state of MT TX to a third link state of DU TX in the second guard period;
a guard period for switching from a first link state of MT TX and/or DU TX to a second link state of DU TX in the first guard period is equal to a guard period for switching from a second link state of MT TX to a third link state of DU TX in the second guard period;
a guard period for switching from a first link state of MT TX and/or DU TX to a second link state of DU RX in the first guard period is equal to a guard period for switching from a second link state of MT TX to a third link state of DU RX in the second guard period;
a guard period for switching from a second link state of DU RX to a first link state of MT TX and/or DU TX in the first guard period is equal to a guard period for switching from a second link state of DU RX to a third link state of MT TX in the second guard period; and
a guard period for switching from a second link state of DU TX to a first link state of MT TX and/or DU TX in the first guard period is equal to a guard period for switching from a second link state of DU TX to a third link state of MT TX in the second guard period.

34. The apparatus according to claim 25, wherein an object to which the first guard period applies is defined by a protocol or configured by a network device, a CU, or an IAB parent node.

35. The apparatus according to claim 34, wherein the object to which the first guard period applies comprises at least one of the following:

MT in the first link state;
MT in the second link state;

DU in the first link state; and
DU in the second link state.

36. The apparatus according to claim 35, wherein the first guard period applies to a start time period or an end time period of a link state of the applied-to object.

37. The apparatus according to claim 25, wherein in a case that the first relay device is an IAB node, the IAB node reports a DU RX offset and/or a time at which the DU RX offset occurs.

38. The apparatus according to claim 25, wherein an IAB parent node is configured with a first offset associated with the first guard period.

39. A relay device, comprising a memory, a processor, and a computer program stored in the memory and capable of running on the processor, wherein when the computer program is executed by the processor, the steps of the link state switching method according to any one of claims 1 to 24 are implemented.

40. A computer-readable storage medium, wherein the computer-readable storage medium stores a computer program, and when the computer program is executed by a processor, the steps of the link state switching method according to any one of claims 1 to 24 are implemented.

41. A chip, comprising a processor and a communications interface, wherein the communications interface is coupled to the processor, and the processor is configured to run programs or instructions to implement the steps of the link state switching method according to any one of claims 1 to 24.

42. A computer program product, wherein when the computer program product is executed by at least one processor, the steps of the link state switching method according to any one of claims 1 to 24 are implemented.

43. A communications device, wherein the communications device is configured to perform the steps of the link state switching method according to any one of claims 1 to 24.

First IAB node     Second IAB node     Donor IAB node

12                    13

11                                      Wire
                                        transmission

14

Terminal              Terminal              Terminal

FIG. 1

F1-AP                                              CU-CP
                                                   CU-UP

RRC                    F1-AP        RRC

| DU | MT |        | DU | MT |        | DU |

FIG. 2

Start

Switch between a first link state and a second link state based on a first guard period — 301

End

FIG. 3

FIG. 4

EP 4 145 907 A1

24

FIG. 5

600

Link state switching apparatus

Switching module

601

FIG. 6

600

Link state switching apparatus

601 — Switching module

602 — First transmission module

FIG. 7

600 —

Link state switching apparatus

601 — Switching module

603 — Second transmission module

FIG. 8

900

Relay device

901 — Processor

Bus interface

Transceiver — 902

903 — Memory

FIG. 9

## INTERNATIONAL SEARCH REPORT

International application No.

**PCT/CN2021/089885**

### A. CLASSIFICATION OF SUBJECT MATTER

H04W 40/22(2009.01)i; H04B 7/155(2006.01)i

According to International Patent Classification (IPC) or to both national classification and IPC

### B. FIELDS SEARCHED

Minimum documentation searched (classification system followed by classification symbols)

H04W; H04Q; H04B

Documentation searched other than minimum documentation to the extent that such documents are included in the fields searched

Electronic data base consulted during the international search (name of data base and, where practicable, search terms used)

CNKI, CNPAT, WPI, EPODOC, 3GPP: 链路状态, 模式, 中继, 保护, 间隔, 保护带, 时间, 集成接入回传, 接入回程, 转换, 切换, 上行, 下行, 移动端, 分布单元, link, state, mode, pattern, RN, relay, node, guard, interval, time, band, IAB, switch, UL, DL, uplink, downlink, MT, DU

### C. DOCUMENTS CONSIDERED TO BE RELEVANT

| Category* | Citation of document, with indication, where appropriate, of the relevant passages | Relevant to claim No. |
|---|---|---|
| X | WO 2020036961 A1 (QUALCOMM INC.) 20 February 2020 (2020-02-20) description paragraphs [0033]-[0045], [0070]-[0089], [0101]-[0157], figures 1-2, 4A-7, 9 | 1-43 |
| X | HUAWEI et al. "Resource multiplexing between backhaul and access in IAB; R1-1910051;" *3GPP TSG RAN WG1 Meeting #98bis;*, 20 October 2019 (2019-10-20), sections 1-2, table 1 | 1-43 |
| A | INTEL CORPORATION. "Overview on RAN1 related issues in IAB; R1-1804755;" *3GPP TSG RAN WG1 #92bis;*, 20 April 2018 (2018-04-20), entire document | 1-43 |
| A | CN 102318229 A (LG ELECTRONICS INC.) 11 January 2012 (2012-01-11) entire document | 1-43 |
| A | CN 106411384 A (LG ELECTRONICS INC.) 15 February 2017 (2017-02-15) entire document | 1-43 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 July 2021** | **27 July 2021** |

| Name and mailing address of the ISA/CN | Authorized officer |
|---|---|
| China National Intellectual Property Administration (ISA/CN) No. 6, Xitucheng Road, Jimenqiao, Haidian District, Beijing 100088 China | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/089885**

| Patent document cited in search report | | | Publication date (day/month/year) | Patent family member(s) | | | Publication date (day/month/year) |
|---|---|---|---|---|---|---|---|
| WO | 2020036961 | A1 | 20 February 2020 | US | 2020059879 | A1 | 20 February 2020 |
| | | | | CN | 112585886 | A | 30 March 2021 |
| CN | 102318229 | A | 11 January 2012 | JP | 2012518325 | A | 09 August 2012 |
| | | | | WO | 2010093221 | A2 | 19 August 2010 |
| | | | | IN | 201103405 | P2 | 26 August 2016 |
| | | | | US | 2015188676 | A1 | 02 July 2015 |
| | | | | US | 2011299614 | A1 | 08 December 2011 |
| | | | | US | 2014029508 | A1 | 30 January 2014 |
| | | | | KR | 20100093503 | A | 25 August 2010 |
| | | | | EP | 2398161 | A2 | 10 May 2017 |
| CN | 106411384 | A | 15 February 2017 | KR | 20110118619 | A | 31 October 2011 |
| | | | | JP | 2014099871 | A | 29 May 2014 |
| | | | | EP | 2400681 | A2 | 28 December 2011 |
| | | | | US | 2012134316 | A1 | 31 May 2012 |
| | | | | WO | 2010095887 | A2 | 26 August 2010 |
| | | | | JP | 2015222967 | A | 10 December 2015 |
| | | | | US | 2013272188 | A1 | 17 October 2013 |
| | | | | JP | 2012518363 | A | 09 August 2012 |
| | | | | CN | 102326347 | A | 18 January 2012 |
| | | | | IN | 201106112 | P4 | 21 December 2012 |

Form PCT/ISA/210 (patent family annex) (January 2015)

**EP 4 145 907 A1**

**REFERENCES CITED IN THE DESCRIPTION**

**Patent documents cited in the description**

- CN 202010367097